# EUROPEAN PATENT SPECIFICATION

(11) **EP 1 724 902 B1**
(45) Date of publication and mention of the grant of the patent: **16.07.2008**
(21) Application number: 06114115.6
(22) Date of filing: 17.05.2006
(51) Int. Cl.: H02J 9/06, F21V 33/00

(54) **Emergency radio, light and power supply**
Notfunk, Notlicht und Notstromversorgung
Radio, éclairage et alimentation de secours

(30) Priority: 19.05.2005 US 682558 P
(43) Date of publication of application: 22.11.2006
(60) Divisional application: 07111500.0
(73) Proprietor: Black & Decker Inc., Newark, Delaware 19711 (US)
(72) Inventor: van Wambeke, Weston J., Towson, Maryland 21266 (US); Erter, Aaron, Phoenix, Maryland 21131 (US); Kagen, Brian, Reisterstown, Maryland 21136 (US); Li, Lumin, Ellicott City, Maryland 21042 (US); Shaver, David m., Brockville, Ontario K6V 3A5 (CA)
(74) Representative: Clark, Charles Robert

(56) References cited:
- WO-A-92/04758
- US-A- 3 458 794
- US-A- 3 968 417
- US-A- 4 749 908
- US-A- 5 055 986
- US-A1- 2001 038 339
- US-A1- 2004 147 295

## Description

The present disclosure relates to radios, illumination devices and power supplies, more particularly, to radios having lights which switch between conventional AC power to DC battery power in the event of a power failure.

Various types of emergency notification systems exist. Some utilize AC current to charge a battery for use when power outages occur. The systems require the device to be switched on after the power outage occurs. While this type of device works satisfactorily for its intended purpose, designers strive to improve the art.

US4749908 describes an emergency power supply device for supplying electrical power and light during supply interruptions. The device senses supply interruptions and automatically closes a switch to operate a light source from a storage battery.

US2004/0147295 describes a portable radio comprising a battery charger for charging external batteries to be used with power tools. The portable radio is also adapted to be powered by external batteries.

US 2001/0038339, which is considered to be the closest prior art, discloses an emergency device according to the preamble of claim 1.

According to the present invention, there is provided an emergency device comprising the features of claim 1. comprising the features of claim 1.

The present disclosure provides the art with an emergency radio, light and power supply which, when a power outage is sensed, is automatically activated. The device, along with activating the light, activates at least one auxiliary function. The auxiliary function may include powering an inverter receptacle, so that cell phones or the like may be used; powering a 12 volt cigar lighter outlet; and powering an AM/FM TV and weather band radio tuner. Also, the present device provides a removable rechargeable flashlight attached to the housing. Further, the device includes a main storage battery to operate the auxiliary devices as well as a back-up battery in the event of an extended power outage where the storage battery dies.

In accordance with a first aspect of the disclosure, an emergency device comprises a housing including an illumination device, a radio receiver, tuner, and speaker. A power source is electrically coupled with the illumination device. The power source is a conventional power cord which is to be plugged into a conventional power outlet. A power outage circuit is coupled with the power source and a storage battery. The power outage circuit senses when power is terminated to the illumination device to activate the storage battery. Thus, when a power outage occurs, the illuminating device is automatically illuminated. The power source is also coupled to the radio receiver, tuner and speaker.

A flashlight holder and a charging station are coupled with the housing to receive and charge a portable flashlight. A power inverter outlet is on the housing and is electrically coupled with the storage battery. A 12 volt cigar lighter outlet is coupled with the housing. The cigar lighter outlet is electrically coupled with the storage battery. A handle is coupled with the housing to enable handling and moving of the radio. The storage battery may be a rechargeable or nonrechargeable battery. Also, a back-up battery source is positioned inside the housing to provide power to the receiver, tuner and speaker in the event of a prolonged power outage.

Further areas of applicability of the present disclosure will become apparent from the detailed description provided hereinafter. It should be understood that the detailed description and specific examples, while indicating the preferred embodiment, are intended for purposes of illustration only and are not intended to limit the scope of the disclosure.

The present teachings will become more fully understood from the detailed description and the accompanying drawings, wherein:

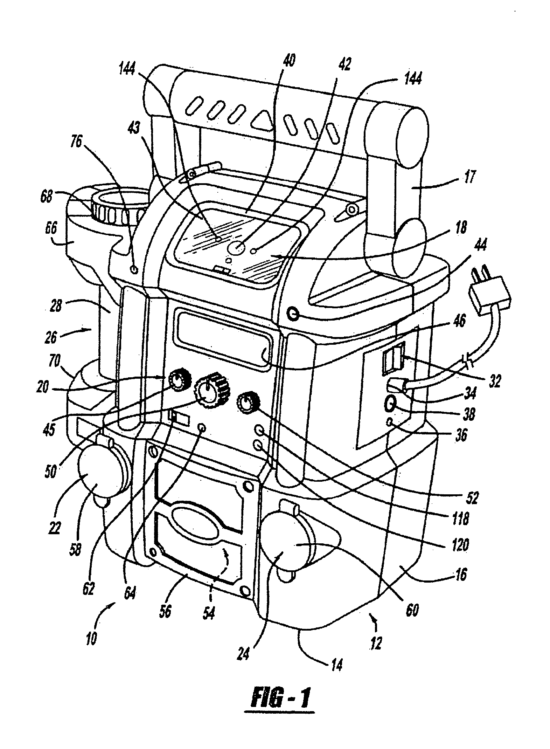

Figure 1 is a perspective view of an emergency device in accordance with the present disclosure.

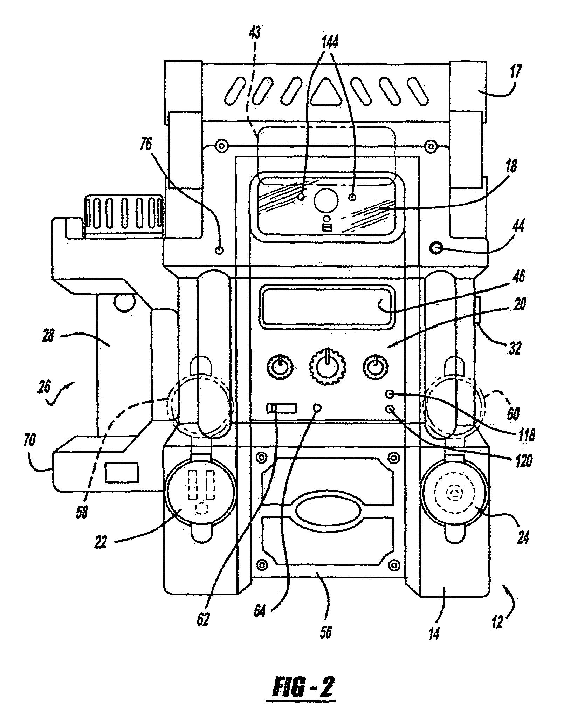

Figure 2 is a front elevation view of the device of Figure 1.

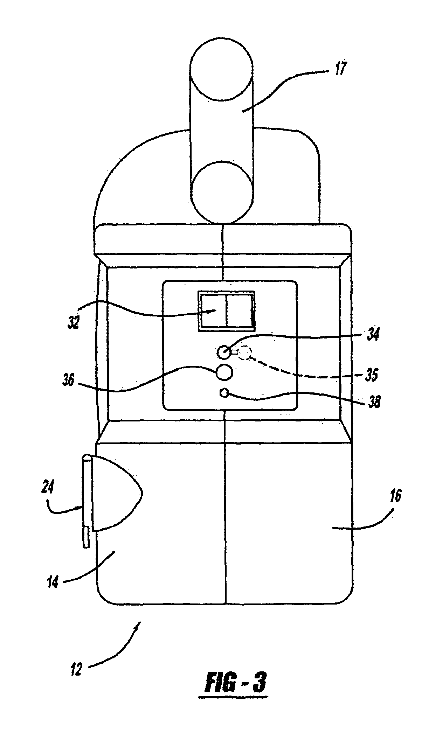

Figure 3 is a side elevation view of the device of Figure 1.
Figure 4 is an internal view of the device housing of Figure 1.
Figure 5 is a schematic view of a circuit of the emergency device.

The following description of the preferred embodiment(s) is merely exemplary in nature and is in no way intended to limit the disclosure, its application, or uses.

Turning to the figures, an emergency device is illustrated and designated with the reference numeral 10. The emergency device 10 includes a housing 12 including two halves 14 and 16 of a clam shell design. The housing 12 has an overall rectangular configuration and includes a rotatable handle 17 at its top end to enable it to be moved from place to place. The housing includes a light 18, a radio 20, an inverter outlet 22, a 12V cigar lighter outlet 24, and a flashlight holder 26. Flashlight holder 26 includes a receiving and charging mechanism for a flashlight 28. A power cord 30 provides power to the emergency device 10.

The emergency device 10 includes a power switch 32 to turn the radio 20 on and off. Power receiving receptacle 34 located on the housing connects the circuitry inside the emergency device 10 to the power cord 30. A cover 35 protects the receptacle 34 when the cord 30 is not plugged in the receptacle 34. Also, a replaceable fuse 36 is present. Also, a fuse LED 38 provides the user with an indicator to indicate whether or not the fuse is intact or blown.

The light 18 is positioned at the top of the housing 12 near the handle 17. The light 18 is of a conventional design including a housing 40 with a primary bulb 42 therein. A pivoting cover 43 enables access to the bulb 42. The primary bulb 42 is coupled with the circuitry as will be explained herein. Also, a light switch 44 is positioned on the housing 12 to activate the light bulb 42 as desired by the user.

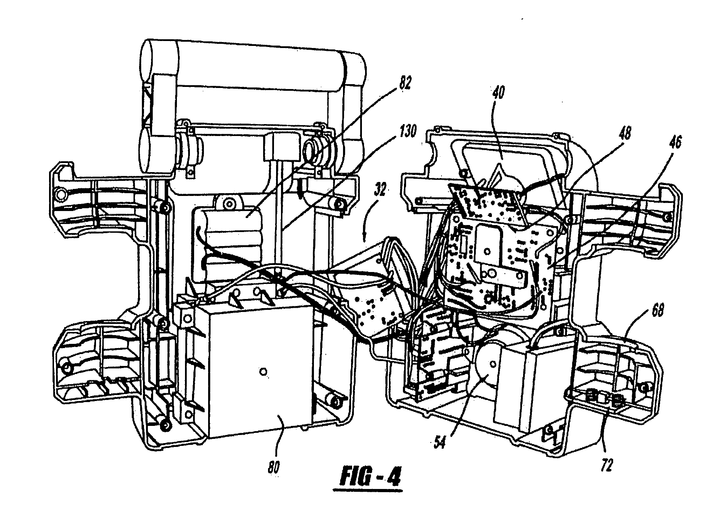

The radio 20 is positioned in the housing 12. The radio 20 includes a display screen 46 which illustrates the different bands on the radio. The radio includes AM, FM, TV, as well as weather bands. The radio 20 includes a receiver 48 (Fig. 4) which is coupled with a band selector button 45. The band selector button 45 enables the receiver 48 to be changed through the different bands. Also, the radio 20 includes a tuner button 50 which is associated with the tuner to select the desired frequency on the desired band. Further, the radio 20 includes a volume button 52 to adjust the volume of the speaker 54. The speaker 54 is positioned at the bottom of the housing 12 and includes a speaker cover 56.

The inverter outlet 22 includes a 110 volt inverter outlet for low power appliances such as mobile phones, small TV's and the like. The outlet is mounted on the housing 12 and includes a cover 58 to prevent damage.

The 12V cigar lighter outlet 24 is positioned in the housing 12 and includes a cover 60 to prevent damage. The inverter outlet 22 as well as the cigar lighter outlet 24 are electrically coupled with a switch 62. The switch 62 enables switching between the inverter outlet 22 and the cigar lighter outlet 24. Also, the switch 62 may be positioned in an off position so that neither the inverter outlet 22 or cigar outlet 24 may be used. The switch 62 as well as the inverter outlet 22 and cigar lighter outlet 24 are electrically coupled with the circuitry as will be explained herein. Also, an LED 64 may be present adjacent the switch 62. The LED 64 indicates if the power is on to the inverter outlet 22 or to the cigar outlet 24.

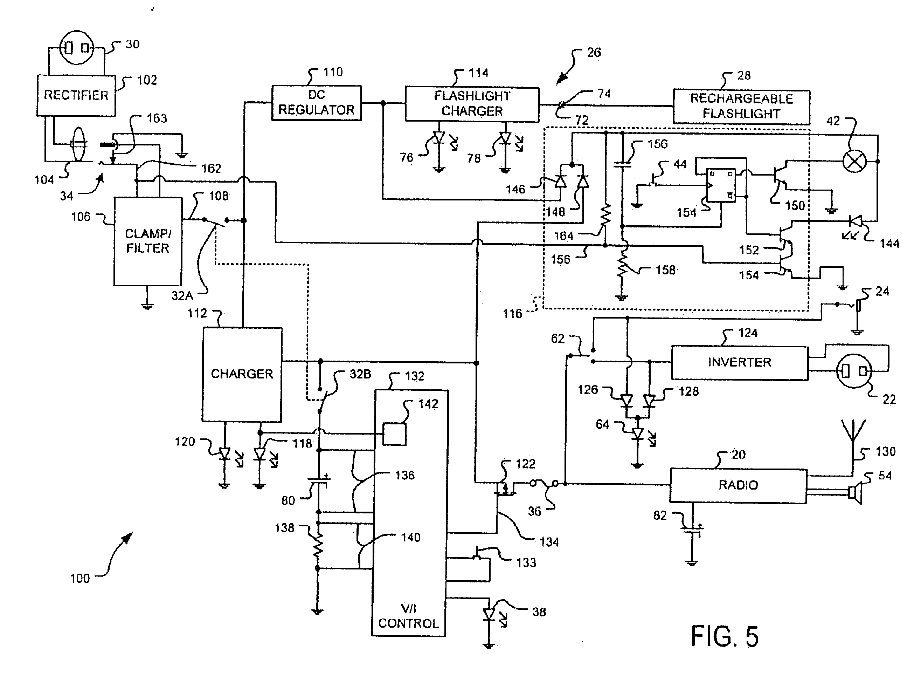

The flashlight holder 26 is formed on a side of the housing 12. The flashlight holder 26 includes a first receiving member 66 which enables the flashlight 28 to pass through an aperture 68 in the flashlight holder 26. A charging base 70 receives the end of the flashlight 28. The receiving base 70 includes a connector 72 (Figs. 4 and 5) which is electrically connected with the circuitry. The connector 72 electrically couples with a connector 74 (Fig. 5) of the flashlight 28 to charge the flashlight 28. The housing 12 includes LED 76 to indicate if the flashlight 28 is in a charged or charging mode.

Turning to Figure 4, the interior of the emergency device 10 is illustrated with the housing halves 14 and 16 separated. The light housing 40 as well as the radio tuner 46, receiver 48 and speaker 54 are all visible inside of the housing. Also, the wiring and circuitry going from the switches to the various components are shown.

Storage battery 80 is positioned inside of the housing 12. The storage battery 80 is charged with the power cord 30. The storage battery 80 powers the radio in emergency situations, as will be explained herein. The battery 80 is a rechargeable battery; however, a nonrechargeable DC battery could be used.

A secondary battery source 82 is positioned within the housing 12. The secondary battery source 82 includes a plurality of replaceable DC batteries. The secondary battery source 82 is coupled with the radio receiver 48 to power the radio receiver in the event of a prolonged power outage when the storage battery becomes drained.

Figure 5 illustrates a circuit diagram for the emergency device 10. The power cord 30 connects to a rectifier 102. The rectifier 102 converts incoming AC power to a regulated DC voltage at a plug 104. In some embodiments, the regulated DC voltage is 15 volts DC (VDC). The DC power receiving receptacle 34 receives the regulated DC voltage from the plug 104. The DC power receiving receptacle 34 connects to a clamping and filter circuit 106. The clamping and filter circuit 106 clips undesirable incoming voltage spikes to a predetermined amplitude and filters undesirable electrical noise from the regulated DC voltage. An output 108 of the clamping and filter circuit 106 provides a filtered DC voltage. The filtered DC voltage is applied to one side of first contacts 32A of the power switch 32. The other side of the first contacts 32A selectively connects the filtered DC voltage to a DC regulator 110 and a storage battery charging circuit 112. The DC regulator 110 steps the filtered DC voltage down to a regulated DC voltage that is applied to a flashlight charging circuit 114 and a lighting control circuit 116. The flashlight charging circuit 114 provides a flashlight charging voltage to the receiving base connector 72. When the connector 74 of the flashlight 28 is mated with the receiving base connector 72, the flashlight charging circuit 114 recharges the flashlight 28. The flashlight charging circuit 114 is connected to the LED 76. The flashlight charging circuit 114 turns on the LED 78 while the flashlight is charging and turns it off when the flashlight 28 is fully charged.

The storage battery charging circuit 112 provides a charging current for the storage battery 80. The storage battery charging circuit 112 also provides supplemental power for the lighting control circuit 116 and the radio 20 while AC power is at the AC power cord 30. An output of the storage battery charging circuit 112 connects to one side of second contacts 32B of the power switch 32. The other side of the second contacts 32B connects to a positive terminal of the storage battery 80. A negative terminal of the storage battery 80 connects to ground through a resistor 138. The storage battery charging circuit 112 connects to a charging LED 118 and a charged LED 120. The storage battery charging circuit 112 turns on the charging LED 118 while it is charging the main battery 80 and turns on the charged LED 120 when the storage battery 80 is fully charged. A transistor 122 switches current from the storage battery 80 and the storage battery charging circuit 112 to the radio 20 and a common terminal of the switch 62. The fuse receptacle 36 connects in series with the switched current from the transistor 122. The switch 62 switches the power from the fuse receptacle 36 between the cigar lighter outlet 24 and an inverter 124. The inverter 124 converts the power to an AC line voltage that is applied to the inverter outlet 22. A wired-OR circuit includes diodes 126 and 128 and has two inputs connected to the power input of the cigar lighter outlet 24 and the power input to the inverter 124, respectively. An output of the wired-OR circuit illuminates the LED 64 when either the cigar lighter outlet 24 or the inverter 124 is powered. The switch 62 can also be moved to an off position that disconnects the power from the cigar lighter outlet 24 and the inverter 124. The LED 64 will be off when the switch 62 is in the off position.

The radio 20 can receive power through the fuse receptacle 36 or from the secondary battery source 82. An antenna 130 receives radio frequency signals and applies them to the radio 20. The speaker 54 also connects to the radio 20.

A voltage and current (V/I) control circuit 132 applies a control signal 134 to the transistor 122. The control signal 134 turns off the transistor 122 when voltage across the storage battery 80 is less than a predetermined voltage and when the current through the storage battery 80 is greater than a predetermined current. The V/I control circuit 132 connects to an LED 133 and turns on the LED 133 on when the control signal has turned off the transistor 122. A reset switch 135 connects to the V/I control circuit 132 and is used to turn the transistor 122 back on by changing a state of the control signal. The V/I control circuit 132 turns off the LED 133 when the control signal has turned on the transistor 122. The V/I control circuit 132 includes voltage sense leads 136 that connect to the positive and negative terminals of the storage battery 80. The V/I control circuit 132 measures the voltage across storage battery 80 through the voltage sense leads 136. The V/I control circuit 132 also includes current sense leads 140 that connect across the current sense resistor 138. The current sense resistor 138 develops a voltage as current flows through it from the storage battery 80. The V/I control circuit 132 uses the voltage developed across the current sense resistor 138 to determine the magnitude of current flowing through the storage battery 80. The V/I control circuit 132 includes an oscillator 142 that connects to the LED 118. The V/I control circuit 132 turns on the oscillator 142 when the V/I control circuit 132 determines that the storage battery 80 is in a discharged condition. The oscillator 142 then causes the LED 118 to blink and indicate to a user that the storage battery 80 needs to be recharged. In some embodiments, the V/I control circuit 132 declares the storage battery 80 is discharged when its voltage is less than about 10.5 volts.

The lighting control circuit 116 will now be described. The lighting control circuit 116 switches power through the bulb 42 and the locator LEDs 144. A wired-OR circuit includes rectifiers 146 and 148 and provides power to the bulb 42 and locator LEDs 144. The LEDs 144 are positioned in the housing 40 at the apexes of a triangle around the bulb 42. The rectifier 146 has an anode connected to the regulated DC voltage. The rectifier 148 has an anode connected to a switched side of the second contacts 32B to receive a switched voltage from the storage battery 80. Cathodes of the rectifiers 146 and 148 are connected together and provide power to one side of the bulb 42 and an anode of the LEDs 144.

A collector of a first transistor 150 connects to the other side of the bulb 42. An emitter of the first transistor 150 connects to ground. A collector of a second transistor 152 connects to a cathode of the LEDs 144. An emitter of the second transistor 152 connects to a collector of a third transistor 154. An emitter of the third transistor 154 connects to ground.

A D-latch 154 has a clock input connected to one side of the switch 44. The other side of the switch 44 connects to ground. A Q-not output of the D-latch 154 connects to a control input of the second transistor 152 and feeds back to a D input of the D-latch 154. A Q output of the D-latch connects to a control input of the first transistor 150. One end of a capacitor 156 connects to the power provided by the cathodes of the rectifiers 146 and 148. The other end of the capacitor 156 connects to one end of a resistor 158. The other end of the resistor 158 connects to ground. A reset input 160 of the D-latch 154 connects to the connection between the capacitor 156 and the resistor 158.

A control input of the third transistor 154 connects to a reference voltage node 162 of the DC power receiving receptacle 34. A grounding tang 163 connects the reference voltage terminal to ground when the plug 104 is removed from the DC power receiving receptacle 34. A reference voltage terminal of the plug 104 connects to the reference voltage node 162 and keeps it substantially at ground potential while the plug 104 is inserted in the DC power receiving receptacle 34 and the power cord 30 is receiving power. When the power cord 30 stops receiving power, the reference voltage terminal of the plug 104 floats with respect to ground while the plug 104 is inserted in the DC power receiving receptacle 34. A pull-up resistor 164 connects between the control input of the third transistor 154 and the power provided by the cathodes of the rectifiers 146 and 148.

Operation of the lighting control circuit 116 will now be described. During normal operation, the power cord 30 is plugged into a working outlet and the plug 104 is inserted in the power receiving receptacle 34. The third transistor 154 is turned off since its control input is pulled to ground by the reference voltage terminal of the plug 104. The locator LEDs 144 are therefore forced off since the third transistor 154 is in the current path of the LEDs 144. For discussion purposes, the Q output of the D latch 154 will be assumed to be low from a power-on reset event (not shown). The bulb 42 is therefore turned off. Pressing the button 44 sends a clock edge to the clock input of the D-latch 154. The Q and Q-not outputs of the D-latch 154 change state with each press of the button 44. The bulb 42 responds to the state of the Q output, however the locator LED 144 remains forced off by the third transistor 154. The button 44 is therefore used during normal operation to switch the bulb 42 on and off.

During a power-out event, the power cord 30 loses power while it is inserted in the power receiving receptacle 34. The third transistor 154 is now turned on since its control input is pulled up by the pull-up resistor 164. At a beginning of the power-out event, the connection between the capacitor 156 and the resistor 158 momentarily asserts the reset input of the D-latch 154. The Q output of the D latch 154 is therefore forced low and turns off the first transistor 150. Thus, the primary bulb 42, if illuminated, is turned off. The reset forces the Q-not output of the D-latch 154 high and turns on the second transistor 152. The locator LED 144 are therefore turned on. Pressing the button 44 sends a clock edge to the clock input of the D-latch 154 and the Q and Q-not outputs of the D-latch 154 change state with each press of the button 44. The button 44 is therefore used to switch between the bulb 42 and the locator LEDs 144 during a power-out event when the plug 104 is inserted in the DC power receiving receptacle 34.

The operation of the emergency device 10 will now be explained during portable operation when the plug 104 is removed from the DC power receiving receptacle 34. The third transistor 154 is turned off since its control input is pulled down to ground by the grounding tang 163. The locator LEDs 144 are therefore forced off since the third transistor 154 is in the current path of the LED 144. The Q output of the D latch 154 will be assumed to be low from a power out event that occurred prior to the portable operation. The bulb 42 is therefore turned off. Pressing the button 44 sends a clock edge to the clock input of the D-latch 154. The Q and Q-not outputs of the D-latch 154 change state with each press of the button 44. The bulb 42 responds to the state of the Q output, however the locator LED 144 remains forced off by the third transistor 154. During portable operation, the button 44 is therefore used to switch the bulb 42 on and off.

Thus, when a power outage is detected by the circuit 100, the circuit 100 transfers to the storage battery 80 for battery power. When this occurs, the locator LEDs 144 automatically illuminates to indicate that a power outage has occurred. Also, at this time, the auxiliary outputs, such as the inverter outlet 22 and/or the cigar lighter outlet 24, may be utilized by the user. Thus, the emergency device 10, upon sensing a power outage, automatically indicates that the power is out.

## Claims

1. An emergency device (10) comprising:
a housing (12);
an illumination device (144);
a receiver (48), tuner and speaker (54) in said housing;
a power source for the emergency device, said power source comprising a power cord (30) to be plugged into a conventional power outlet and a storage battery (80), the storage battery being a rechargeable battery that is electrically coupled with said power cord;
at least one power outlet (22, 24) electrically coupled with said power source and said storage battery for providing power to an external device; **characterised by**
a circuit (116) coupled with said power cord, said circuit sensing when power is terminated in said cord and actuating said illumination device (144) in response to sensing when power is terminated in said cord; and
a replaceable secondary battery source (82) for powering said emergency device.

2. A device according to Claim 1, further comprising a flashlight holder (26) and charging station (70), said flash light holder and charging station coupled with said housing and said power source.

3. A device according to Claim 1 or 2, wherein at least one said power outlet comprises a power inverter outlet (22) on said housing electrically coupled with said power source and said storage battery.

4. A device according to any one of the preceding claims, wherein at least one said power outlet comprises a cigar lighter outlet (24) coupled with said housing, said cigar lighter outlet electrically coupled with said power source and said storage battery.

5. A device according to any one of the preceding claims, further comprising a handle (17) coupled with said housing.

## Patentansprüche

1. Notfalleinrichtung (10), umfassend:
ein Gehäuse (12),
eine Beleuchtungseinrichtung (144),
einen Empfänger (48), ein Empfangsteil und einen Lautsprecher (54) in dem Gehäuse,
eine Stromquelle für die Notfalleinrichtung, wobei die Stromquelle ein Versorgungskabel (30) zum Einstecken in einen herkömmlichen Versorgungsanschluss und eine Speicherbatterie (80) umfasst, die eine wiederaufladbare Batterie ist, die elektrisch mit dem Versorgungskabel verbunden ist,
zumindest einen Versorgungsanschluss (22, 24), der mit der Stromquelle und der Speicherbatterie elektrisch verbunden ist, um Spannung für eine externe Einrichtung bereitzustellen, **gekennzeichnet durch**
eine Schaltung (116), die mit dem Versorgungskabel verbunden ist, wobei die Schaltung erfasst, wenn die Versorgung in dem Kabel beendet wird, und die Beleuchtungseinrichtung (144) in Reaktion auf ein Erfassen, wenn die Versorgung in dem Kabel beendet wird, betätigt, und
eine auswechselbare zweite Batteriequelle (82) zum Versorgen der Notfalleinrichtung.

2. Einrichtung nach Anspruch 1, ferner mit einem Stablampenhalter (26) und einer Ladestation (70), wobei der Stablampenhalter und die Ladestation mit dem Gehäuse und der Stromquelle verbunden sind.

3. Einrichtung nach Anspruch 1 oder 2, wobei wenigstens einer der Versorgungsanschlüsse einen Wechselrichterversorgungsanschluss (22) an dem Gehäuse aufweist, der elektrisch mit der Stromquelle und der Speicherbatterie verbunden ist.

4. Einrichtung nach einem der vorhergehenden Ansprüche, wobei wenigstens einer der Versorgungsanschlüsse einen Zigarettenanzünderanschluss (24) umfasst, der mit dem Gehäuse verbunden ist, wobei der Zigarettenanzünderanschluss elektrisch mit der Stromquelle und der Speicherbatterie verbunden ist.

5. Einrichtung nach einem der vorhergehenden Ansprüche, ferner mit einem Griff (17), der mit dem Gehäuse verbunden ist.

## Revendications

1. Dispositif d'urgence (10) comprenant :
un boîtier (12) ;
un dispositif d'éclairage (144) ;
un récepteur (48), syntoniseur et haut-parleur (54) dans ledit boîtier ;
une source d'alimentation pour le dispositif d'urgence, ladite source d'alimentation comprenant un cordon d'alimentation (30) à brancher à l'intérieur d'une prise d'alimentation conventionnelle et un accumulateur (80), l'accumulateur étant une batterie rechargeable qui est couplée électriquement audit câble d'alimentation ;
au moins une prise d'alimentation (22, 24) couplée électriquement à ladite source d'alimentation et audit accumulateur pour fournir de l'alimentation à un dispositif externe ; **caractérisé par**
un circuit (116) couplé audit câble d'alimentation, ledit circuit détectant lorsque l'alimentation est coupée dans ledit câble et actionnant ledit dispositif d'éclairage (114) en réponse à la détection que l'alimentation est coupée dans ledit câble ; et
une source de batterie secondaire remplaçable (82) destinée à faire fonctionner ledit dispositif d'urgence.

2. Dispositif selon la revendication 1, comprenant en outre un support de lampe torche (26) et un poste de chargement (70), lesdits support de lampe torche et poste de chargement étant couplés audit boîtier et à ladite source d'alimentation.

3. Dispositif selon la revendication 1 ou 2, dans lequel au moins une dite prise d'alimentation comprend une prise de convertisseur d'alimentation (22) sur ledit boîtier couplé électriquement à ladite source d'alimentation et audit accumulateur.

4. Dispositif selon l'une quelconque des revendications précédentes, dans lequel au moins une dite prise d'alimentation comprend une prise d'allume-cigare (24) couplée audit boîtier, ladite prise d'allume-cigare étant couplée électriquement à ladite source d'alimentation et au dit accumulateur.

5. Dispositif selon l'une quelconque des revendications précédentes, comprenant en outre une poignée (17) couplée audit boîtier.
